# EUROPEAN PATENT APPLICATION

(11) **EP 2 535 848 A2**
(43) Date of publication of application: **19.12.2012**
(21) Application number: 12171796.1
(22) Date of filing: 13.06.2012
(51) Int. Cl.: G06K 19/073

(54) **Communication device and semiconductor chip**

(30) Priority: 17.06.2011 JP 2011134903
(71) Applicant: Elpida Memory, Inc., Tokyo (JP)
(72) Inventor: Taguchi, Masao, Chuo-ku, Tokyo (JP)
(74) Representative: Glawe, Delfs, Moll

(57) **Abstract**

A device includes a first substrate that has a first antenna having a first loop and second loop that form loop shapes viewed in a planar projection; and a second substrate that has a second antenna having a third loop and fourth loop that form loop shapes viewed in the planar projection. The first substrate and the second substrate are disposed so that the first antenna and the second antenna face each other. At least when the first substrate and the second substrate operate, the first antenna and the second antenna are in a state that the first antenna and the second antenna are capable of being magnetically coupled.

## Description

### TECHNICAL FIELD

This application is based upon and claims the benefit of the priority of Japanese patent application No. 2011-134903, filed on June 17, 2011, the disclosure of which is incorporated herein in its entirety by reference thereto.

The present disclosure relates to a communication device using magnetism and, in particular, a communication device applicable to communication between semiconductor chips. The present disclosure also relates to an electronic device comprising the communication device.

### BACKGROUND

Recently, wire bonding has been used for connection between semiconductor chips in one semiconductor package, for example, the connection between the semiconductor device of an MPU (Micro Processor Unit) and the semiconductor device of a DRAM (Dynamic Random Access Memory), a flash memory or the like.

As information communication other than the wire bonding, information communication using magnetic coupling has been proposed (Non-Patent Document 1: Noriyuki Miura et al., "A 0.7V 20fJ/bit Inductive-Coupling Data Link with Dual-Coil Transmission Scheme", 2010 IEEE Symposium on VLSI Circuits/Technical Digest of Technical Papers, 2010, pp. 201-202). In this method, coils are formed in semiconductor chips, and a transformer is formed between the semiconductor chips in order to be magnetically coupled.

When a signal is transmitted using the magnetic coupling, according to the couple of the simple coils, a receiving circuit also receives voltage that is induced when a radio wave (noise) is received from the exterior other than the semiconductor chips to be coupled, Therefore, the noise has been reduced by special signal process to the transmission signal, for example, by modulating carrier frequency and picking out only the modulated component. The accurate signal has also been reproduced, even if there are some bit defects, by encoding the transmission signal (Hamming code, for example). There is further means of sending the receiving signal back to a sending side, comparing it with original information, and receiving it if agreed or sending it again if not agreed.

Japanese Patent Kokai Publication No.JP2010-278518A which corresponds to US2010/0302039A1 (Patent Document 1) discloses a communication device that performs non-contact communication with loop-antenna electromagnetic induction. A communication device according to Patent Document 1 comprises a conductor plane; a first loop antenna disposed on one surface of the conductor plane via a first magnetic sheet; a second loop antenna being in a loop direction opposite to a loop direction of the first loop antenna and having an opening structure approximately identical in shape to the first loop antenna, the second loop antenna being disposed on another surface of the conductor plane via a second magnetic sheet so as to be roughly superpose on the first loop antenna; and a communication circuit processing a communication signal transmitted and received by the first and second loop antennas.

### (Discussion on related art)

The disclosures of Patent Document 1 and Non-patent Document 1 are incorporated herein by reference thereto in their entirety. The following analysis is given viewed in the present disclosure.

In the wire bonding method, a structure becomes complicated, and it is difficult to realize the information transmission between the semiconductor chips with high speed and low electric power. When a plurality of the semiconductor chips are stacked to be packaged, for example, especially in a case of an SSD (Solid-State Drive) for large capacity of a semiconductor memory device and the like, positions of bonding pads are limited to the peripheral regions of the semiconductor chips. In this case, in order to be connected to a circuit located in and around the center of the semiconductor chip, it is necessary to electrically connect the bonding pads to the circuit located in and around the center with an internal wiring(s) of the semiconductor chip. Therefore, the length of the wiring is increased, and the information transmission takes a time and the power loss occurs.

In order to avoid complication of the structure caused by the wire bonding, a TSV (Through Silicon Via) has been developed, the TSV electrically connecting the semiconductor chips by forming a through-hole(s) that penetrates the semiconductor chip and filling the through-hole(s) with a conductor. However, this means makes the manufacturing process complicated.

On the other hand, there are three problems in the signal transmission of the magnetic coupling. First, encoding or confirmation of information is performed as a countermeasure to noises, it takes for a time final completion of information transmission. Secondly, if strong magnetic field is given from the exterior, a large signal is input to an input circuit, bringing out saturation of the circuit, and it takes a time for recovery. In a worse case, the input circuit will be destroyed by an excessive input. Thirdly, a side channel attack, that is, stealing information in a semiconductor device by detecting a weak radio wave that escapes from the magnetic coupling portion to the exterior, becomes amenable. For a countermeasure to the side channel attack, it is necessary to take a countermeasure that keeps leakage of the radio wave to a minimum.

Although it may be also considered that the signal is encoded as a countermeasure against the side channel attack, the transmission is delayed by the encoding of the signal. Further, in the signal transmission by magnetic coupling, it is also possible to input a false signal by an illicit access from the exterior.

Although a method of forming a magnetic shield by being surrounded by a material having high magnetic permeability such as Permalloy is considered as a means for preventing information leakage and illicit access, the cost is increased as compared with a plastic package. If the magnetic shield is removed, the information leakage and illicit access can not be prevented.

In the communication device disclosed in Patent Document 1, because there is the magnetic sheet, a radio wave coming in a communication direction (normal direction) is deflected by the magnetic sheet. Accordingly, the first loop antenna and the second loop antenna can not cancel noises coming in the communication direction. That is, the noises can not be decreased. On the other hand, if the magnetic shield and conductor plane are not provided in the communication device disclosed in Patent Document 1, a communication signal coming in the communication direction is decreased by the cancellation.

### SUMMARY

According to a first aspect of the disclosure, there is provided a communication device, comprising: a first substrate that has a first antenna having a first loop and second loop that form loop shapes viewed in a planar projection; and a second substrate that has a second antenna having a third loop and fourth loop that form loop shapes viewed in the planar projection. The first substrate and the second substrate are disposed so that the first antenna and the second antenna face each other. At least when the first substrate and the second substrate operate, the first antenna and the second antenna are in a state that the first antenna and the second antenna are capable of being magnetically coupled.

According to a second aspect of the disclosure, there is provided a semiconductor chip. The semiconductor chip operates by receiving lines of magnetic force. The semiconductor chip comprises a first loop that generates electromotive force in a predetermined direction when receiving the lines of magnetic force in a first direction, and a second loop which is electrically connected with the first loop so as to generate electromotive force in an opposite direction to the first loop when receiving the lines of magnetic force in the first direction on an operation and to decrease the electromotive force generated in the first loop.

### BRIEF DESCRIPTION OF THE DRAWINGS

Fig. 1 is a diagram of an electronic device according to a first exemplary embodiment of the present disclosure.
Fig. 2 is a schematic top view of an antenna illustrated in Fig. 1.
Fig. 3 is a schematic side view of the antenna illustrated in Fig. 1.
Fig. 4 is a diagram of an electronic device according to a mode different from the electronic device according to the first exemplary embodiment illustrated Figs. 1-3.
Fig. 5 is a diagram of a communication device of the present disclosure.
Fig. 6 is a diagram of an electronic device according to a second exemplary embodiment of the present disclosure.
Fig. 7 is a diagram of an electronic device according to a third exemplary embodiment of the present disclosure.
Fig. 8 is a diagram of an electronic device according to a fourth exemplary embodiment of the present disclosure.
Fig. 9 is a schematic plan view of an antenna in an electronic device and communication device according to a fifth exemplary embodiment of the present disclosure.
Fig. 10 is a schematic plan view of an antenna in an electronic device and communication device according to a sixth exemplary embodiment of the present disclosure.
Fig. 11 is a diagram illustrating a method of testing the electronic device according to the sixth exemplary embodiment of the present disclosure.
Fig. 12 is a diagram illustrating the method of testing the electronic device according to the sixth exemplary embodiment of the present disclosure.
Fig. 13 is a schematic plan view of an antenna in an electronic device and communication device according to a seventh exemplary embodiment of the present disclosure.

### PREFERRED MODEMS

The disclosure will be now described herein with reference to illustrative exemplary embodiments. Those skilled in the art will recognize that many alternative exemplary embodiments can be accomplished using the teachings of the present disclosure and that the disclosure is not limited to the exemplary embodiments illustrated for explanatory purposes.

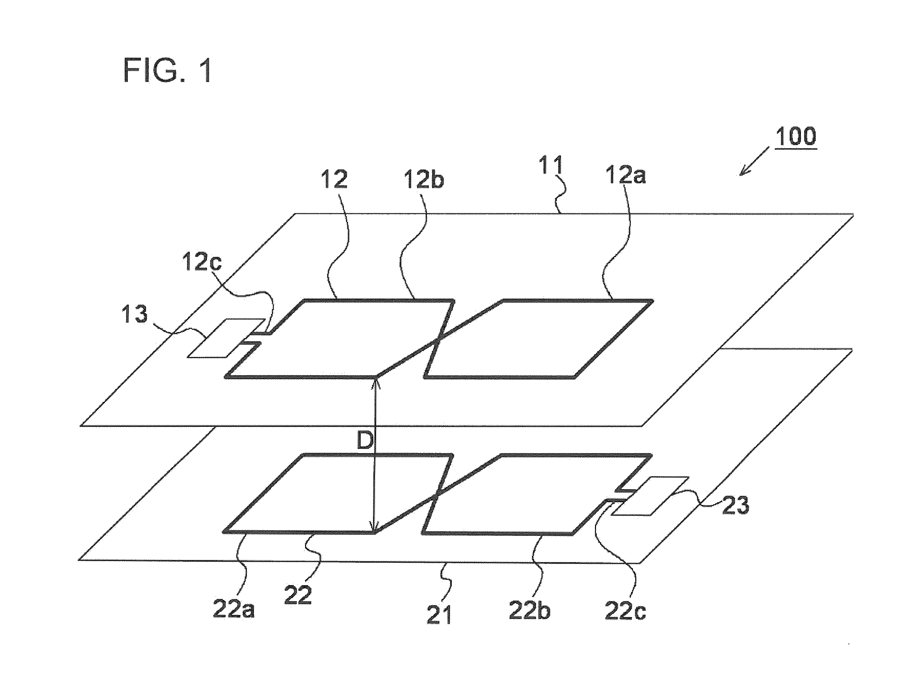

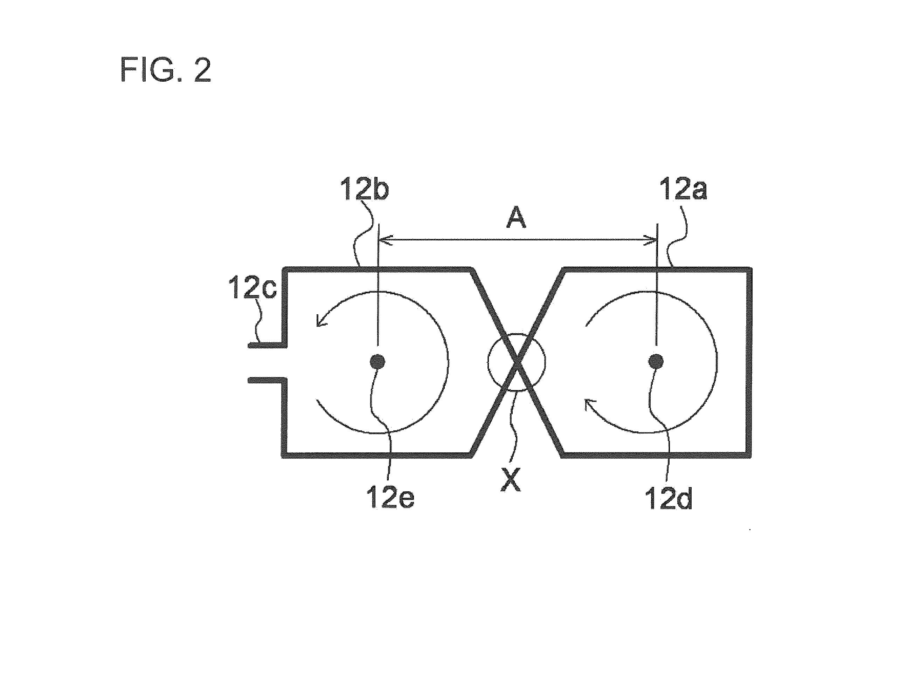

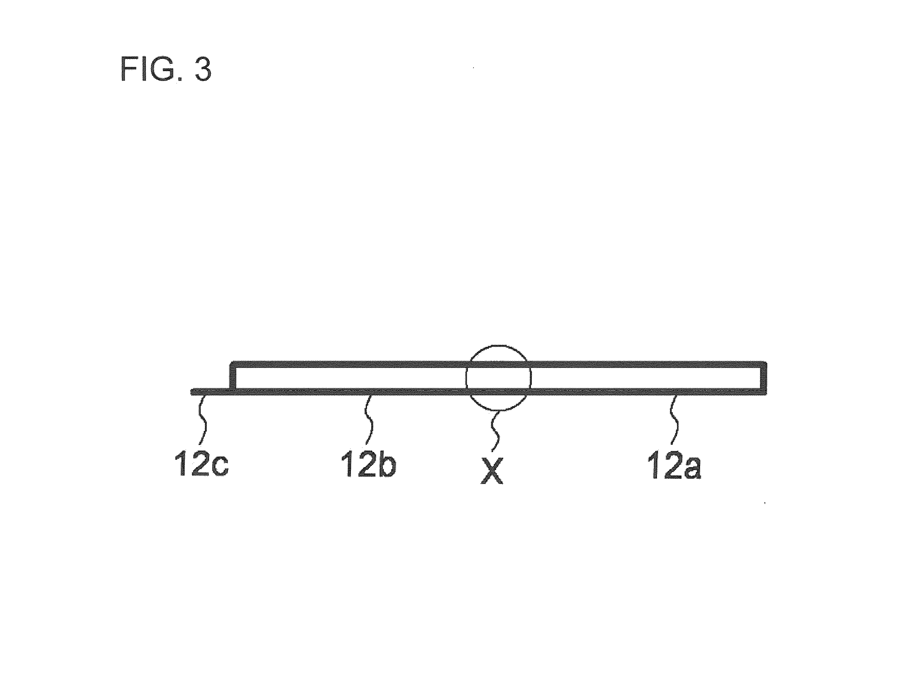

A communication device and electronic device according to a first exemplary embodiment of the present disclosure will be explained. Fig. 1 illustrates a diagram of the electronic device according to the first exemplary embodiment of the present disclosure, Fig. 2 illustrates a schematic top view of an antenna illustrated in Fig. 1. Fig. 3 illustrates a schematic side view of the antenna illustrated in Fig. 1.

The electronic device 100 comprises a first electronic component 11 and a second electronic component 21. A semiconductor device may be given as an example of the electronic device 100. In this example, stacked semiconductor chips or a substrate on which an electronic device such as a semiconductor chip is mounted may be given as an example of the first electronic component 11 and second electronic component 21.

The first electronic component 11 has a first antenna 12, a first transmission/reception circuit 13 that is connected to the first antenna 12, and an internal circuit 14 that gives/receives a signal to/from an exterior of the first electronic component 11 through the first transmission/reception circuit 13. The second electronic component 21 has a second antenna 22 and a second transmission/reception circuit 23 that is connected to the second antenna 22. The communication device of the present disclosure has the first antenna 12, the first transmission/reception circuit 13, the second antenna 22, and the second transmission/reception circuit 23. The first transmission/reception circuit 13 and second transmission/reception circuit 23 may be transmission circuits and reception circuits. In the first antenna 12 and second antenna 22, one functions as a transmission antenna, and the other functions as a reception antenna that receives a radio wave from the transmission antenna.

Next, the antenna in the communication device of the present disclosure will be explained. Although the following explanation gives an example of the first antenna 12, that may be also true for the second antenna 22. The first antenna 12 is formed in a shape of a horizontal figure of numeral "eight" [8] with one conductor (interconnect). That is, in the mode illustrated in Fig. 2, for example, one conductor forms the first antenna 12 in the order of an upper side of a connection line 12c, an upper side of the second loop 12b, the first loop 12a, a lower side of the second loop 12b, and a lower side of the connection line 12c. Both ends of the first antenna 12 are connected to the first transmission/reception circuit 13, As viewed in a planar projection as shown in Fig. 2, the first antenna 12 has a first loop 12a and second loop 12b that have a substantially ring shape, and also has a the connection line 12c that connects the first antenna 12 with the first transmission/reception circuit 13. The first loop 12a and second loop 12b are adjacent to each other. In the plan view shown in Fig. 2, the first loop 12a and second loop 12b have a shape as if they connect to each other at an intersection point X. However, at the intersection point X, the conductor line of the first antenna 12 has no contact with itself as shown in Fig. 3.

When a current flows in the first antenna 12, the current flows in different directions in the first loop 12a compared with the second loop 12b. As arrow directions shown in Fig. 2, for example, the current of the first loop 12a flows in a clockwise direction, and the current of the second loop 12b flows in a counterclockwise direction. Therefore, between the first loop 12a and the second loop 12b, lines of magnetic field (magnetic fluxes) in different directions are formed across loop surfaces formed by the first loop 12a and second loop 12b (a surface similar to the surface shown by Fig. 2).

The first loop 12a and second loop 12b may have various shapes. For example, a polygon as shown in Figs. 1-2 may be adopted, and a circle, ellipse and the like may be also adopted. It is preferred that the first loop 12a and second loop 12b have similar shapes to each other and preferably the same shapes. It is preferred that the first loop 12a and second loop 12b have similar sizes to each other and preferably the same sizes. In the mode shown in Fig. 2, for example, except for the connection line 12c part to be connected to the first transmission/reception circuit 13, the first loop 12a and second loop 12b form point symmetry having the intersection point X as a point of symmetry or line symmetry about an axis passing through the intersection point X. When the first loop 12a and second loop 12b have the same shape and the same size, even if the noise radio wave (including the illicit radio wave) comes from the exterior to the first antenna 12 in the direction of the loop surface, the first loop 12a and second loop 12b generate the lines of magnetic flux that have the opposite directions, and the influence of the noise radio wave can be reduced by canceling the lines of magnetic flux each other.

It is preferred that the first antenna 12 and second antenna 22 are disposed so as to be magnetically coupled. Therefore, it is preferred that the first antenna 12 and second antenna 22 have similar shapes to each other and preferably the same shapes. It is preferred that the first loop 12a and second loop 12b have similar sizes to each other and preferably the same size.

In the mode shown in Fig. 2, the first antenna 12 and first transmission/reception circuit 13 and the second antenna 22 and second transmission/reception circuit 23 are disposed so as to have point symmetry. In the planar projection viewing the first antenna 12 and second antenna 22 vertically (i.e. in a normal direction to the place), it is preferred that the first loop 12a of the first antenna 12 and the fourth loop 22b of the second antenna 22 are disposed so as to be overlapped with each other. Similarly, it is preferred that the second loop 12b of the first antenna 12 and the third loop 22a of the second antenna 22 are disposed so as to be overlapped with each other.

It is preferred that D≤A is satisfied, wherein A represents the distance between the first center 12d of the first loop 12a and the second center 12e of the second loop 12b in the first antenna 12, and D represents the distance between the first electronic component 11 and the second electronic component 21, that is, the distance between the first antenna 12 and the second antenna 22. The reason is that, in case of D>A, the transmission antenna forms a closed magnetic field around itself, and there is probability that the magnetic field that reaches the reception antenna becomes week. If the electric components 11, 21 are semiconductor chips, its thickness may be 30^{µ*m*}, for example. In this case, the distance D between the first antenna 12 and the second antenna 22 may be 100^{µ*m*} or less, for example, and the distance A between both centers may be 100^{µ*m*} to 200^{µ*m*}, for example.

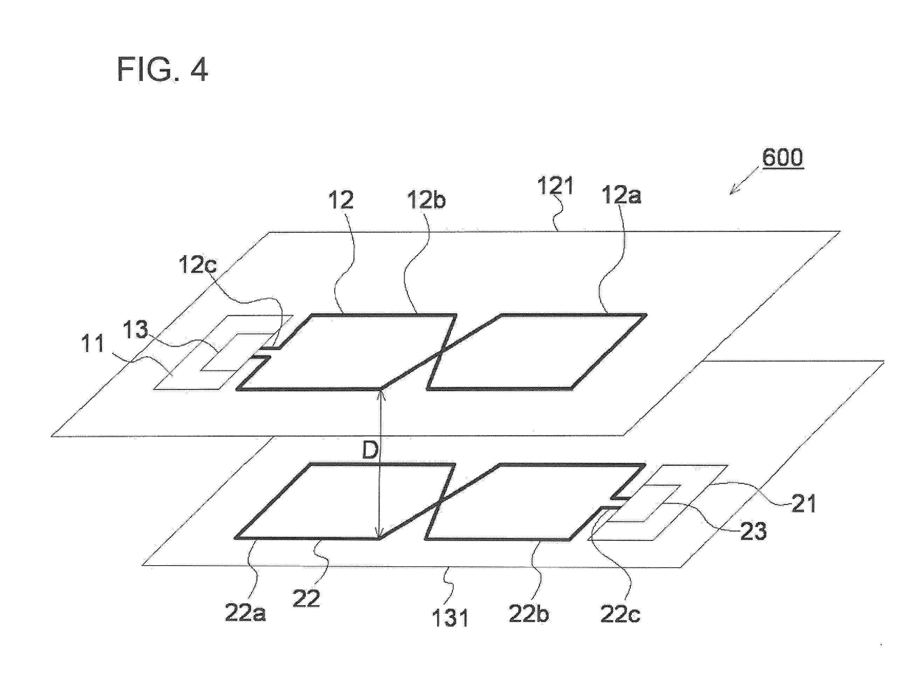

The electronic components 11, 21 may be substrates for mounting a semiconductor chip and the like. Fig. 4 illustrates a diagram of an electronic device according to a different mode from that of Figs. 1-3 of the electronic device according to the first exemplary embodiment. The electronic device 600 further comprises a first substrate 121 and a second substrate 131 that is put on the first substrate 121. The first electronic component 11 and the first antenna 12 are mounted on the first substrate 121. The second electronic component 21 and the second antenna 22 are mounted on the second substrate 131. The first electronic component 11 includes the first transmission/reception circuit 13. The second electronic component 21 includes the second transmission/reception circuit 23. In this case, the first antenna 12 and second antenna 22 may be formed as conductors printed on the first substrate 121 and second substrate 131, respectively. In following explanation, although the electronic component will be given as a base material on which an antenna element is formed, the electronic component may be replaced by a substrate as shown in Fig. 4.

In Figs. 1-3, although the antennas having two loops are shown, an antenna having four or more (an even number) loops may be used.

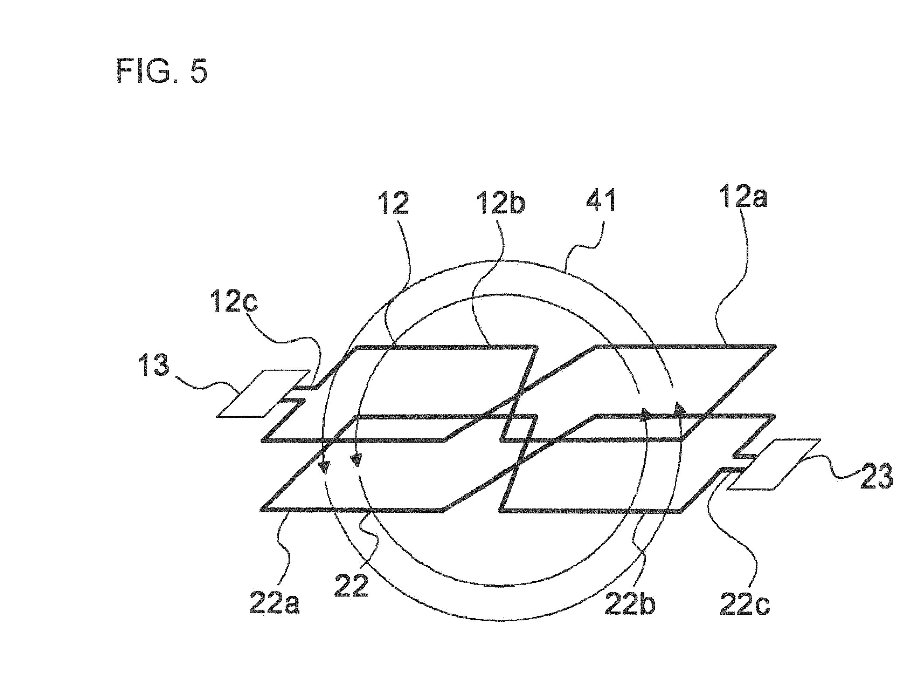

Next, an operation of the communication device of the present disclosure will be explained. Fig. 5 illustrates a diagram of the communication device of the present disclosure. Herein, the first antenna 12 is used as a transmission antenna, the second antenna 22 is used as a reception antenna, and the signal transmission between the first electronic component 11 and the second electronic component 21 will be explained.

In the first antenna 12, a pair of the opposite magnetic fields is generated in the first loop 12a and second loop 12b. Similarly, in the second antenna 22, a pair of the opposite magnetic fields is generated in the third loop 22a and fourth loop 22b. By the magnetic coupling, an induced electromotive force generated in one loop and an induced electromotive force generated in the other loop are synthesized to regenerate a signal component. Thereby, the signal from the transmission antenna is transmitted to the reception antenna.

A magnetic loop 41 as shown in Fig. 5 is formed by the magnetic coupling in the first antenna 12 and second antenna 22. By forming the magnetic loop 41, the magnetic field generated in the first antenna 12 and second antenna 22 becomes hard to stray out to the exterior, This can make the side channel attack difficult and prevent the information leakage.

Even if any strong magnetic field is applied to the communication device of the present disclosure from the exterior, any noise radio wave is received, or any illicit access is tried, this can be canceled by a pair of the magnetic fields formed in the antennas and prevent the generation of the electromotive force. Accordingly, even if any strong magnetic field is applied from the exterior, the input circuit can be prevented from becoming a saturated state. Even if any noise radio wave is received, the influence of the noise can be reduced. Even if any illicit access is tried, the transmission of the false information can be suppressed.

Because as the countermeasure against the radio wave leakage from the interior and the countermeasure against the reception of an unnecessary radio wave, encoding or modulating of the signal are unnecessary, the delay of the signal transmission can be prevented. Because a shield such as a magnetic shield is unnecessary, the increase of the cost can be prevented.

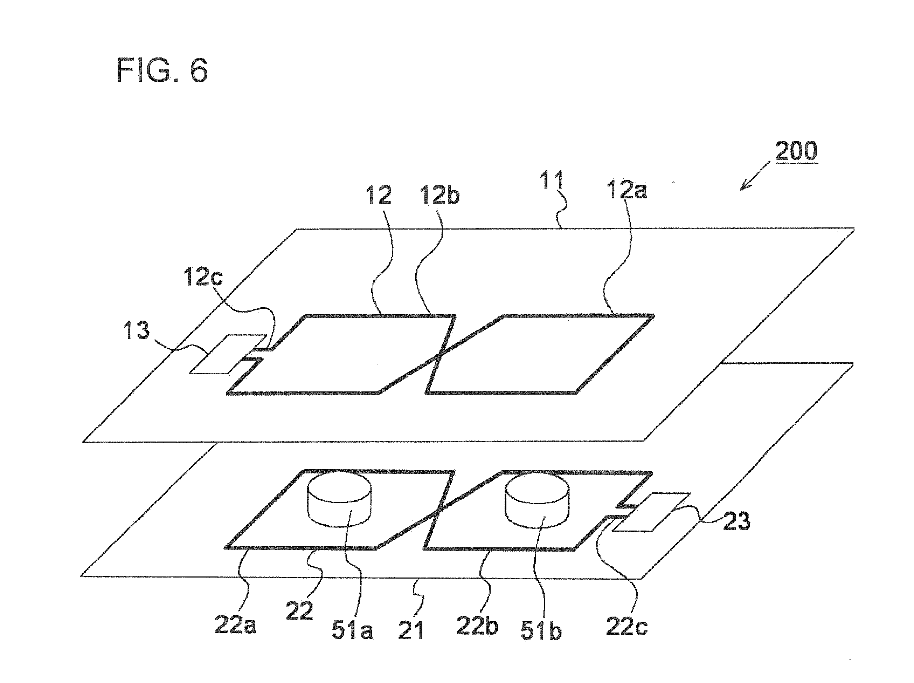

Next, a communication device and electronic device according to a second exemplary embodiment of the present disclosure will be explained. Fig. 6 illustrates a diagram of the electronic device according to the second exemplary embodiment of the present disclosure. In Fig. 6, the same symbols are used to the same elements as the elements shown in Figs. 1-5

The communication device and electronic device 200 according to the second exemplary embodiment of the present disclosure further comprises magnetic materials 51a, 51b that promote the magnetic coupling between the first antenna 12 and the second antenna 22, in addition to the communication device and electronic device according to the first exemplary embodiment. The magnetic materials 51a 51b may be a material having enough magnetic permeability to strengthen the magnetic coupling, and ferrite may be given as an example of the magnetic materials 51a, 51b.

The magnetic materials 51a, 51b may be disposed between the first antenna 12 and the second antenna 22. In the mode shown in Fig. 6, as viewed in the planar projection, the first magnetic material 51a is disposed in the third loop 22a of the second antenna 22 of the second electronic component 21 and the second magnetic material 51b is disposed in the fourth loop 22b of the second antenna 22.

The magnetic materials 51a, 51b may be disposed within an adhesive material (not illustrated) that joins the first electronic component 11 and the second electronic component 21 in a layered state, for example,

According to the second exemplary embodiment, the formation of the magnetic loop can be promoted.

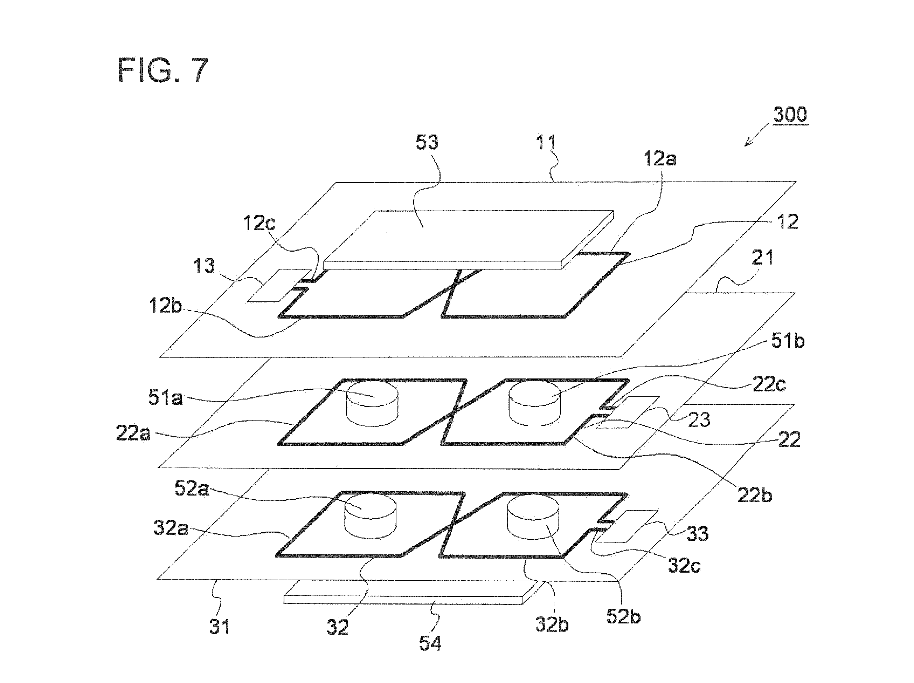

Next, a communication device and electronic device according to a third exemplary embodiment of the present disclosure will be explained. Fig. 7 illustrates a diagram of the electronic device according to the third exemplary embodiment of the present disclosure. In Fig. 7, the same symbols are used to the same elements as the elements shown in Figs. 1-6.

In the first and second exemplary embodiment, two electric components are stacked, whereas, in the third exemplary embodiment, three electric components are stacked. That is, the communication device and electronic device 300 according to a third exemplary embodiment of the present disclosure further comprises a third electronic component 31, a third antenna 32 that is provided in the third electronic component 31 and has a fifth loop 32a and sixth loop 32b, a third transmission/reception circuit 33 that is connected to the third antenna 32, and a third magnetic material 52a and fourth magnetic material 52b that are provided in the fifth loop 32a and sixth loop 32b, in addition to the communication device and electronic device according to the second exemplary embodiment. This can perform the signal communication among three or more electronic components.

The communication device and electronic device 300 according to third exemplary embodiment of the present disclosure further comprises a fifth magnetic material 53 and sixth magnetic material 54 that strengthen the formation of the magnetic coupling. The fifth magnetic material 53 and sixth magnetic material 54 may be a material having enough magnetic permeability to strengthen the magnetic coupling, and (soft) ferrite may be given as an example of the magnetic materials 53, 54. The fifth magnetic material 53 and sixth magnetic material 54 are disposed in the outside of the top and lowest antennas. That is, the fifth magnetic material 53 is disposed above the first antenna 12. The sixth magnetic material 54 is disposed below the third antenna 32.

The fifth magnetic material 53 and sixth magnetic material 54 are disposed so as to be overlapped with two loops as viewed in the planner projection. That is, the fifth magnetic material 53 is disposed over the first antenna 12 so as to be overlapped with both of the first loop 12a and second loop 12b. This can strengthen the magnetic coupling between the first loop 12a and the second loop 12b. The sixth magnetic material 54 is disposed under the third antenna 32 so as to be overlapped with both of the fifth loop 32a and sixth loop 32b. This can strengthen the magnetic coupling between the fifth loop 32a and the sixth loop 32b. The magnetic flux generated by the loops flows through the magnetic materials 53 and 54 to form a closed flux circuit, which causes to reduce the stray flux. This formulation also serves to noise-resistance and resistance to attack from the exterior.

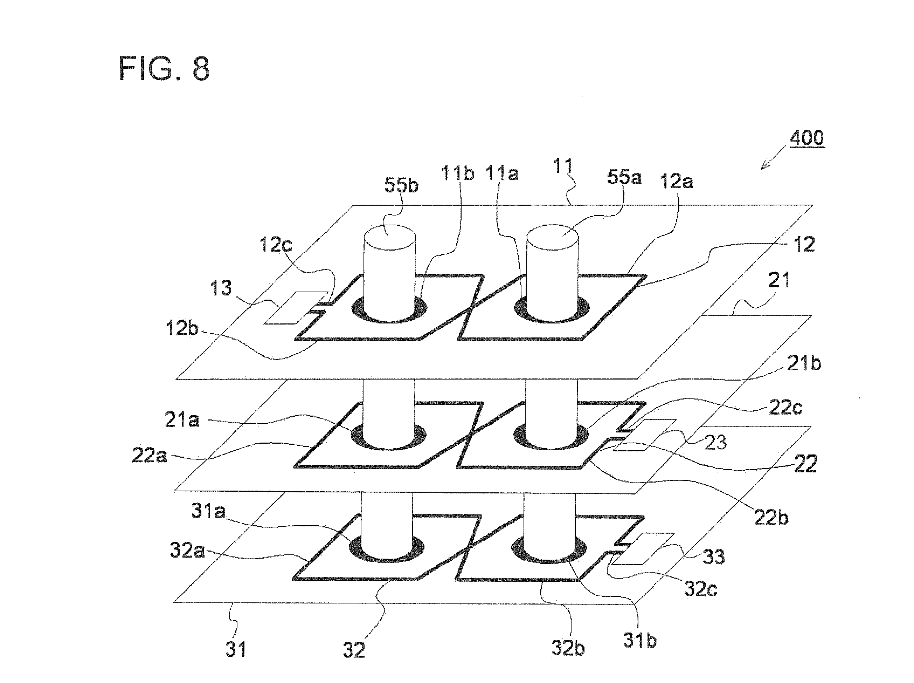

Next, a communication device and electronic device according to a fourth exemplary embodiment of the present disclosure will be explained. Fig. 8 illustrates a diagram of the electronic device according to the fourth exemplary embodiment of the present disclosure. In Fig. 8, the same symbols are used to the same elements as the elements shown in Figs. 1-7. In the fourth exemplary embodiment, the magnetic coupling is promoted by using the TSV technique.

The electronic device 400 has a different mode from the third exemplary embodiment in regard to the magnetic material. The first electronic component 11 has a first through-hole 11 a formed in the first loop 12a of the first antenna 12 and a second through-hole 11b formed in the second loop 12b. Similarly, the second electronic component 21 has a third through-hole 21a formed in the third loop 22a of the second antenna 22 and a fourth through-hole 21b formed in the fourth loop 22b. The third electronic component 31 has a fifth through-hole 31a formed in the fifth loop 32a of the third antenna 32 and a sixth through-hole 31b formed in the sixth loop 32b. In the mode shown in Fig. 8, the first through-hole 11a, fourth through-hole 21b and sixth through-hole 31b are linearly disposed. Similarly, the second through-hole 11b, third through-hoie 21a and fifth through-hole 31a are linearly disposed. The first magnetic material 55a is inserted into (through) the first through-hole 11a, fourth through-hoie 21b and sixth through-hole 31b. Similarly, the second magnetic material 55b is inserted into (through) the second through-hole 11b, third through-hole 21a and fifth through-hole 31a. The first magnetic material 55a and second magnetic material 55b may be a material having enough magnetic permeability to strengthen the magnetic coupling, and (soft) ferrite may be given as an example of the first magnetic material 55a and second magnetic material 55b.

According to the fourth exemplary embodiment, the magnetic coupling can be strengthened in the first to third antennas 12-32 together. This can realize a signal communication using less driving power.

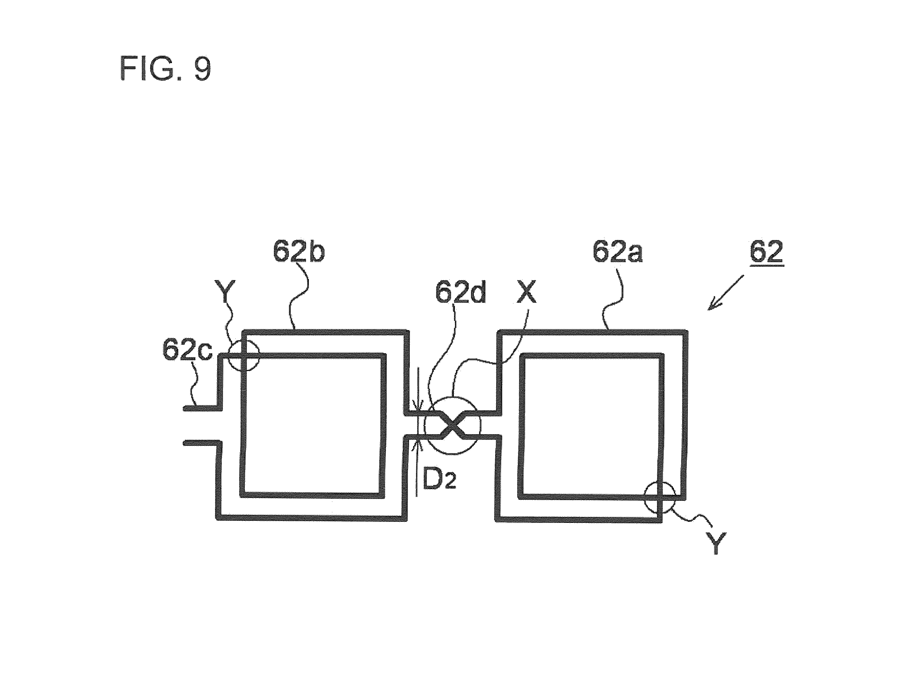

Next, a communication device and electronic device according to a fifth exemplary embodiment of the present disclosure will be explained. Fig. 9 illustrates a schematic plan view of an antenna in the electronic device and communication device according to the fifth exemplary embodiment of the present disclosure. The antenna, which is different from the modes shown in Figs. 1-8, in the communication device and electronic device according to a fifth exemplary embodiment of the present disclosure will be explained.

The antennas shown in Figs. 1-8 have a single winding of the loops, whereas an antenna 62 in this exemplary embodiment has multiple winding of a first loop 62a and second loop 62b. That is, the first loop 62a and second loop 62b are shaped in coil of a two-winding fomulation. This can strengthen a magnetic field that the antenna 62 generates. At intersection points X, Y shown in Fig. 9, the antenna is not in contact with itself.

The antenna 62 has a different connection between the loops from that of the antennas shown in Figs. 1-8. Two second connection lines 62d to be connected to the other loop extend from each of the first loop 62a and second loop 62b. Two second connection lines 62d cross in a middle way. The distance D2 between two second connection lines 62d is narrower than the sizes of the first loop 62a and second loop 62b and is preferably as close as possible to such a degree that two second connection lines 62d do not come in contact with each other. It is also preferred that two second connection lines 62d are parallel to each other. This can inhibit unnecessary magnetic field from being formed in a portion of the second connection line and prevent the information leakage.

The antenna according to the fifth exemplary embodiment may be used as the antennas in the communication devices and electronic devices according to the first to fourth exemplary embodiments.

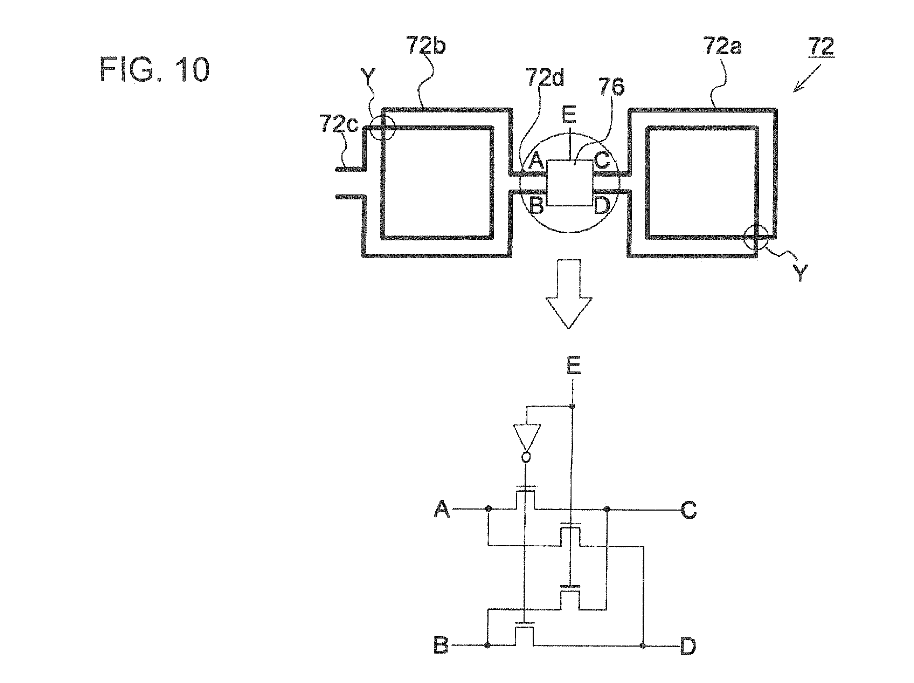

Next, a communication device and electronic device according to a sixth exemplary embodiment of the present disclosure will be explained. Fig. 10 illustrates a schematic plan view of an antenna in the electronic device and communication device according to the sixth exemplary embodiment of the present disclosure.

An antenna 72 in the electronic device and communication device according to the sixth exemplary embodiment of the present disclosure has a switch circuit 76 that is connected to each of a first loop 72a and second loop 72b via second connection lines 72d between the first loop 72a and the second loop 72b. The first loop 72a and second loop 72b are formed of separate conductors. Although Fig. 10 illustrates multiple windings (coils) of the first loop 72a and second loop 72b, the first loop 72a and second loop 72b may have a single winding.

The switch circuit 76 switches a current direction in the first loop 72a in regard to a current direction in the second loop 72b. The lower drawing of Fig. 10 illustrates one example of the switch circuit 76. In this case, when high voltage is applied to an input terminal E, the winding directions of the currents in the first loop 72a and second loop 72b are opposite to each other. When low voltage is applied to the input terminal E, the winding directions of the currents in the first loop 72a and second loop 72b are the same. By switching the relative current direction in each loop, the communication device can be tested.

Although the mode shown in Fig. 10 is based on the antenna according to the fifth exemplary embodiment, the antenna according to the first exemplary embodiment may be also applicable.

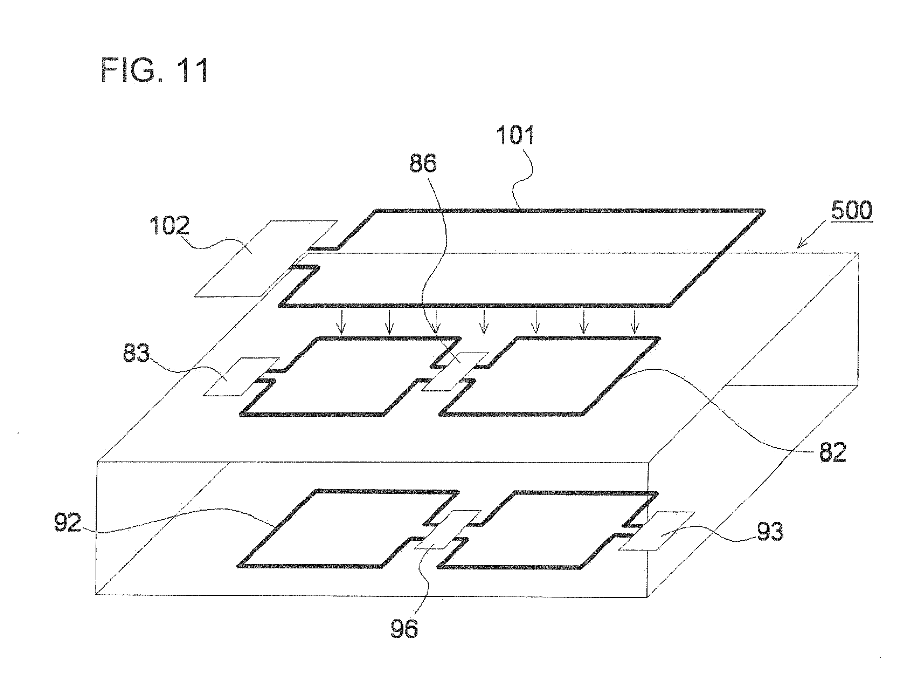

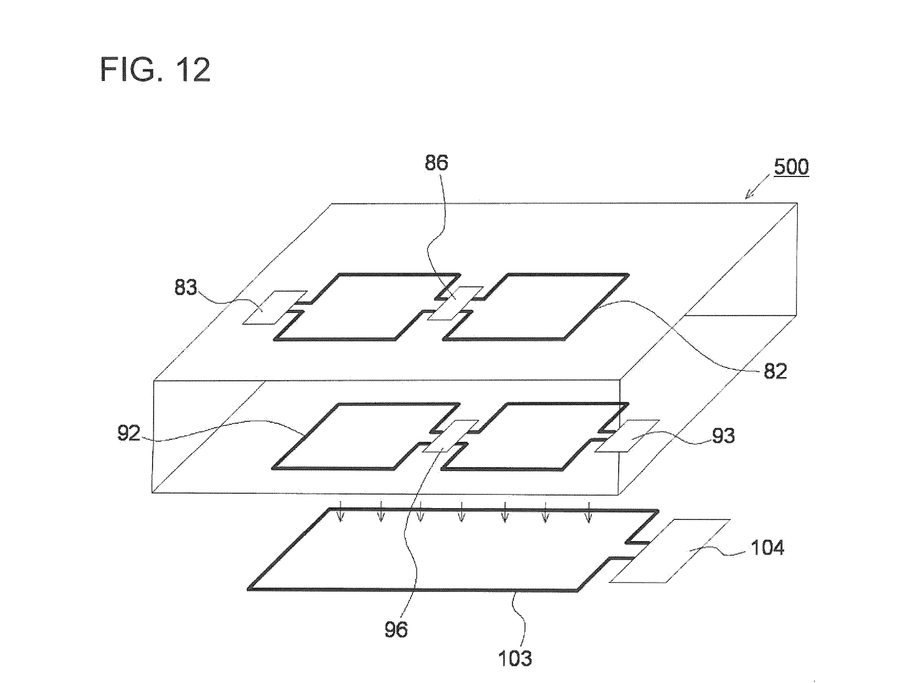

Figs. 11 and 12 illustrate diagrams that show a method of testing the electronic device according to the sixth exemplary embodiment of the present disclosure. The electronic device 500 comprises a first antenna 82, a first transmission/reception circuit 83, an internal circuit 84, a second antenna 92 and a second transmission/reception circuit 93. The first antenna 82 has a first switch circuit 86 between loops. The second antenna 92 has a second switch circuit 96 between loops. On an ordinary operation, the first switch circuit 86 and second switch circuit 96 set the current directions so as to generate magnetic fields in opposite directions between the loops of each of the antennas 82, 92. On the other hand, on the test, the first switch circuit 86 and second switch circuit 96 set the current directions so as to generate magnetic fields in same directions between the loops of each of the antennas 82, 92. As shown in Fig. 11, for example, a signal for a memory test can be input from the magnetic coupling part by giving the magnetic field from the exterior of the electronic device 500 with an external transmission antenna 101 and external transmission circuit 102. As shown in Fig. 12, information communicated between the first antenna 82 and the second antenna 92 can be detected by detecting the magnetic field that leaks out of the electronic device 500 to the exterior with an external reception antenna 103 and external reception circuit 104. This can provide a nondestructive testing of the electronic device 500 from the exterior.

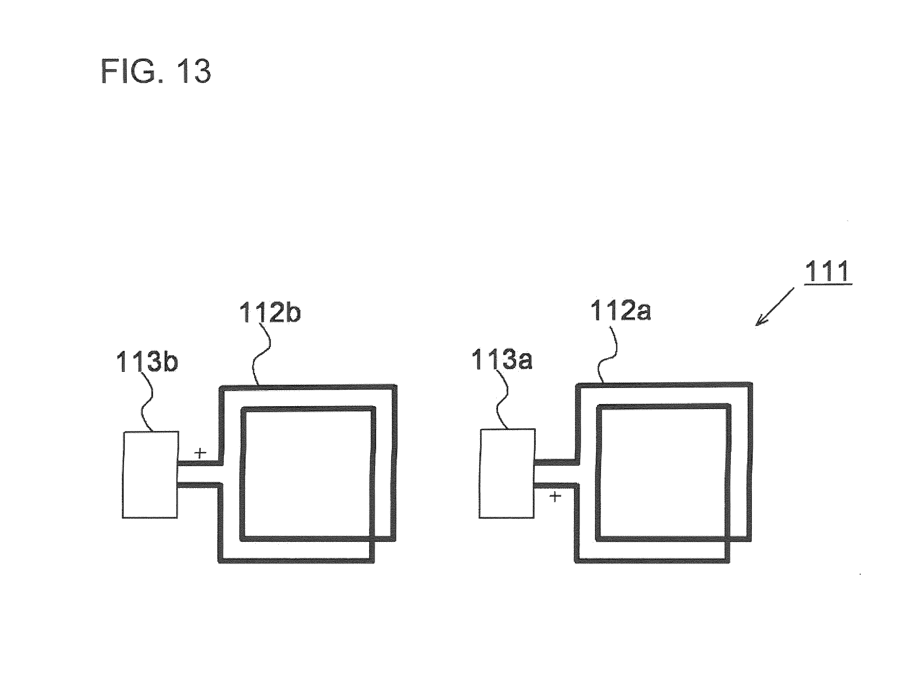

Next, a communication device and electronic device according to a seventh exemplary embodiment of the present disclosure will be explained. Fig. 13 illustrates a schematic plan view of an antenna in the electronic device and communication device according to the seventh exemplary embodiment of the present disclosure.

In the first to sixth exemplary embodiments, the magnetic fields in the opposite directions are formed in the antennas formed of one element, whereas, in the seventh exemplary embodiment, one antenna is separated into a plurality of elements. An antenna 111 has a first loop 112a, a first transmission/reception circuit 113a that is connected to the first loop 112a, a second loop 112b, and a second transmission/reception circuit 113b that is connected to the second loop 112b. The antenna 111 corresponds to one antenna and one transmission/reception circuit in the first to sixth exemplary embodiments. The first loop 112a and second loop 112b are formed of separate conductors and correspond to the first loop and second loop of one antenna. Although Fig. 13 illustrates multiple windings (coils) of the first loop 112a and second loop 112b, each of the first loop 112a and second loop 112b may have single winding.

In the antenna 111, the first transmission/reception circuit 113a and second transmission/reception circuit 113b generate the magnetic fields in the opposite directions between the first loop 112a and the second loop 112b. That is, the first transmission/reception circuit 113a and second transmission/reception circuit 113b makes opposite phases of the current flowing in the first loop 112a and the current flowing in the second loop 112b. This can obtain the same effect as the first to sixth exemplary embodiments with two loops.

By separating the antenna into two elements (parts) without a switch circuit, power loss caused by parasitic resistance and parasitic capacitance in the switch circuit can be prevented, and signal reflection can be inhibited. By separating one antennal 111 into the first loop 112a and second loop 112b and driving them by respective circuits, e.g. two circuits of the first transmission/reception circuit 113a and second transmission/reception circuit 113b, an influence of the resistance in each loop can be reduced. Therefore, the conductors of the first loop 112a and second loop 112b can be made thinner, and volume occupied by the antenna 111 can be reduced.

The present disclosure provides at least one of the following advantages according to the exemplary embodiments.

In the present disclosure, a pair of magnetic fields opposing each other can be generated even by one antenna line. Based on this formulation, adverse influence of foreign electromagnetic wave from the exterior can be reduced. For example, an incoming noise wave may be cancelled by the magnetic field pair, offering a noise reduction. Also, an illicit invasion may be suppressed, even if attempted from the exterior, by the cancelling effect of the magnetic field pair. Similarly, the saturation or destruction of magnetic field may be suppressed when a strong magnetic field is exerted on the circuit.

In one exemplary embodiment, a magnetic field which is closed to the exterior may be generated using two antenna lines. Thereby, leakage of information can be prevented by suppressing the detection of the generated magnetic field from the exterior.

It is also possible to eliminate the encoding of the signal, which serves to promote rapid transmission of signals. Further, magnetic shield may be dispensed with, resulting in a cost reduction.

The communication device and electronic device of the present disclosure are explained based on the above exemplary embodiments, but are not limited to the above exemplary embodiments, and may include any modification, change and improvement to the exemplary embodiments within the scope of the present disclosure and based on the basic technical idea of the present disclosure. Within the scope of the claims of the present disclosure, various combinations, displacements and selections of disclosed elements are available.

Various modes are possible within the present disclosure as follows.

### Mode 1.

There is provided a communication device, comprising: a first antenna having a first loop and second loop that form loop shapes viewed in a planar projection; and a second antenna having a third loop and fourth loop that form loop shapes viewed in the planar projection. The first antenna and the second antenna are magnetically coupled.

### Mode 2.

There is provided a communication device, comprising: a first antenna having a first loop and a second loop that corresponds to a magnetic field in an opposite direction to the first loop; and a second antenna having a third loop and a fourth loop that corresponds to a magnetic field in an opposite direction to the third loop. The first antenna and the second antenna are magnetically coupled.

### Mode 3.

In the communication device, preferably, the first loop and the second loop have shapes so as to cancel each other the magnetic fields generated by the first loop and the second loop; and the third loop and the fourth loop have shapes so as to cancel each other the magnetic fields generated by the third loop and the fourth loop.

### Mode 4.

In the communication, preferably, a first current direction in the first loop and a second current direction in the second loop are opposite to each other viewed in a planar projection; and a third current direction in the third loop and a fourth current direction in the fourth loop are opposite to each other viewed in the planar projection.

### Mode 5.

In the communication, preferably, the first loop and the second loop have a relationship substantially of line symmetry or point symmetry viewed in a planar projection; and the third loop and the fourth loop have a relationship substantially of line symmetry or point symmetry viewed in the planar projection.

### Mode 6.

In the communication device, preferably, the first antenna and the second antenna are disposed so that the first loop and the fourth loop are overlapped with each other viewed in a planar projection and that the second loop and the third loop are fitted with each other viewed in the planar projection.

### Mode 7.

In the communication device, preferably a first direction of the magnetic field generated in the first loop is identical to a fourth direction of the magnetic field generated in the fourth loop; and a second direction of the magnetic field generated in the second loop is identical to a third direction of the magnetic field generated in the third loop.

### Mode 8.

In the communication device, preferably the first antenna has a same shape with the second antenna.

### Mode 9.

In the communication device, preferably, each of the first antenna and the second antenna has a shape of a horizontal figure of a numeral "eight"; and each of the first antenna and the second antenna are not in contact with itself at each intersection point of the figure "eight".

### Mode 10.

In the communication device, preferably, each of the first antenna and the second antenna has parallel lines to each other that extend from each loop to connect one loop with the other loop; and a distance between the parallel lines is narrower than a size of each loop.

### Mode 11.

In the communication device, preferably, in each of the first antenna and the second antenna, one loop and the other loop are formed of separate conductors.

### Mode 12.

In the communication device, preferably, in each of the first antenna and the second antenna, one loop and the other loop are connected with each other via a switch circuit; and the switch circuit switches relative directions of the magnetic fields generated in the first loop and the second loop.

### Mode 13.

In the communication device, preferably, at least one of the first to fourth loops has multiple windings of a conductor. Mode 14.
In the communication device, preferably, the device further comprising: a magnetic material that strengthens the magnetic coupling between the first antenna and the second antenna.

### Mode 15.

In the communication device, preferably, the magnetic material is disposed between the first antenna and the second antenna and in at least one loop of the first to fourth loops viewed in a planar projection.

### Mode 16.

In the communication device, preferably, the magnetic material is disposed in a region that is not sandwiched between the first antenna and second antenna so as to be overlapped with two loops of one antenna viewed in a planar projection.

### Mode 17.

In the communication device, preferably, a distance between centers of two loops in one antenna is equal to or greater than a distance between the antennas adjacent to each other.

### Mode 18.

There is provided an electronic device, comprising the communication device according to the present disclosure; a first electronic component; and a second electronic component placed on the first electronic component. The first antenna is provided in the first electronic component. The second antenna is provided in the second electronic component.

### Mode 19.

There is provided an electronic device, comprising the communication device according to the present disclosure; a first substrate; and a second substrate placed on the first substrate. The first antenna is provided in/on the first substrate. The second antenna is provided in/on the second substrate.

### Mode 20.

The electronic device according to mode 18, wherein, preferably, at least one of the first electronic component and the second electronic component has a through-hole formed in at least one loop of at least one of the first antenna and the second antenna; and a magnetic material is inserted into the through-hole.

### Mode 21.

A communication device according to the first aspect.

### Mode 22.

In the communication device, preferably, the second loop is provided so as to correspond to a magnetic field in an opposite direction to the first loop; the fourth loop is provided so as to correspond to a magnetic field in an opposite direction to the third loop; the first loop and the fourth loop are magnetically coupled; and the second loop and the third loop are magnetically coupled.

### Mode 23.

In the communication device, preferably, the first loop and the second loop have shapes so as to generate lines of magnetic force opposite to each other; and the third loop and the fourth loop have shapes so as to generate lines of magnetic force opposite to each other.

### Mode 24.

In the communication, preferably, the first loop and the second loop have a relationship substantially of line symmetry or point symmetry viewed in a planar projection; and the third loop and the fourth loop have a relationship substantially of line symmetry or point symmetry viewed in the planar projection.

### Mode 25

In the communication device, preferably a first direction of the magnetic field generated in the first loop is identical to a forth direction of the magnetic field generated in the fourth loop; and a second direction of the magnetic field generated in the second loop is identical to a third direction of the magnetic field generated in the third loop.

### Mode 26.

In the communication device, preferably the first antenna has a same shape with the second antenna.

### Mode 27.

In the communication device, preferably, each of the first antenna and the second antenna has a shape of a horizontal figure of a numeral "eight"; and each of the first antenna and the second antenna are not in contact with itself at each intersection point of the figure "eight".

### Mode 28.

In the communication device, preferably, each of the first antenna and the second antenna has parallel lines to each other that extend from each loop to connect one loop with the other loop; and a distance between the parallel lines is narrower than a size of each loop.

### Mode 29.

A communication device according to the second aspect.

### Mode 30.

In the semiconductor chip, preferably, the first loop and second loop are connected with each other through a switching element.

### Mode 31.

In the semiconductor chip, preferably, the semiconductor chip further comprises a transmission/reception circuit that is connected with the first loop or the second loop and that gives/receives a signal between the connected loop and an internal circuit.

### Mode 32.

In the semiconductor chip, preferably, the semiconductor chip further comprises magnetic materials formed in a region surrounded by the first loop and in a region surrounded by the second loop.

### Mode 33.

In the semiconductor chip, preferably, the magnetic material is formed of a through-silicon via that penetrates the semiconductor chip.

A further problem, object and exemplary embodiment of the present disclosure become clear from the entire disclosure of the present invention including claims and drawings.

The present disclosure may be applied for signal communication between semiconductor chips or signal communication between interposer substrates in a semiconductor device having a stack of the semiconductor chips or a semiconductor device having a stack of the interposer substrates.

## Claims

1. A communication device, **characterized by** comprising:
a first substrate that has a first antenna including a first loop and second loop that form loop shapes viewed in a planar projection; and
a second substrate that has a second antenna including a third loop and fourth loop that form loop shapes viewed in the planar projection; wherein
the first substrate and the second substrate are disposed so that the first antenna and the second antenna face each other; and
at least when the first substrate and the second substrate operate, the first antenna and the second antenna are in a state that the first antenna and the second antenna are capable of being magnetically coupled.

2. The device according to claim 1, **characterized in that**:
the second loop is provided so as to correspond to a magnetic field in an opposite direction to the first loop;
the fourth loop is provided so as to correspond to a magnetic field in an opposite direction to the third loop;
the first loop and the fourth loop are magnetically coupled; and
the second loop and the third loop are magnetically coupled.

3. The device according to claim 1 or 2, **characterized in that**:
the first loop and said second loop include shapes so as to generate magnetic fields opposite to each other; and
the third loop and said fourth loop include shapes so as to generate magnetic fields opposite to each other.

4. The device according to any one of claims 1-3, **characterized in that**:
the first loop and said second loop include a relationship substantially of line symmetry or point symmetry viewed in a planar projection; and
said third loop and said fourth loop include a relationship substantially of line symmetry or point symmetry viewed in the planar projection.

5. The device according to any one of claims 1-4, **characterized in that**:
a first direction of the magnetic field generated in the first loop is identical to a fourth direction of the magnetic field generated in the fourth loop; and
a second direction of the magnetic field generated in the second loop is identical to a third direction of the magnetic field generated in the third loop.

6. The device according to any one of claims 1-5, **characterized in that**:
the first antenna includes a same shape with said second antenna.

7. The device according to any one of claims 1-6, **characterized in that**:
each of the first antenna and the second antenna includes a shape of a horizontal figure of a numeral "eight"; and
each of the first antenna and the second antenna are not in contact with itself at each intersection point of the figure "eight".

8. The device according to any one of claims 1-7, **characterized in that**:
each of the first antenna and the second antenna has parallel lines to each other that extend from each loop to connect one loop with the other loop; and
a distance between the parallel lines is narrower than a size of each loop.

9. A semiconductor chip **characterized by** comprising:
a first loop that generates electromotive force in a predetermined direction when receiving a magnetic field in a first direction, and a second loop which is electrically connected with the first loop so as to generate electromotive force in an opposite direction to the first loop when receiving the magnetic field in the first direction on an operation and to decrease the electromotive force generated in the first loop.

10. The semiconductor chip according to claim 9, **characterized in that**:
the first loop and second loop are connected with each other through a switching element.

11. The semiconductor chip according to claim 9 or 10, **characterized by** further comprising:
a transmission/reception circuit that is connected with the first loop or the second loop and that gives/receives a signal between the connected loop and an internal circuit.

12. The semiconductor chip according to any one of claims 9-11, **characterized by** further comprising magnetic materials formed in a region surrounded by the first loop and in a region surrounded by the second loop.

13. The semiconductor chip according to claim 12, **characterized in that**:
the magnetic material is formed of a through-silicon via that penetrates the semiconductor chip.
